# EUROPEAN PATENT SPECIFICATION

(11) **EP 2 634 113 B1**
(45) Date of publication and mention of the grant of the patent: **29.10.2014**
(21) Application number: 12157734.0
(22) Date of filing: 01.03.2012
(51) Int. Cl.: B65D 85/04, B65H 49/08

(54) **Container for welding wire with central tapering structure**
Behälter für Schweißdraht mit zentraler Verjüngungsstruktur
Récipient pour fil de soudage avec structure conique centrale

(43) Date of publication of application: 04.09.2013
(73) Proprietor: ISAF S.p.A., 38089 Storo (TN) (IT); DZW Drahtzieherei Wiesenburg GmbH, 14827 Wiesenburg (DE)
(72) Inventor: Stocchetti, Roberto, 38023 Cles (Trento) (IT); Beyer, Hans-Joachim, 14827 Wiesenburg (DE)
(74) Representative: Pittis, Olivier

(56) References cited:
- EP-A1- 2 353 764
- WO-A2-2009/027784
- JP-A- 8 039 142
- US-A- 3 729 092
- US-A- 3 778 000

## Description

The present invention relates to a container or drum for packaging, storing, transporting and unwinding a coil or spool of welding wire, and the use of such a container in a welding operation, preferably an electric arc welding process, such as a MIG or MAG welding process.

One of the major problems encountered in automatic or robotic welding is the control of the welding wire as it is withdrawn from a drum. When using a welding wire that comes out of a drum, twists in the wire are created by the spooling process as the wire is withdrawn from the drum.

Actually, when a welding wire is packed in a round drum, i.e. a cylindrical container having a circular cross section typically of about 55 cm in diameter, the wire is always twisted. In other words, twists often appear as the wire is extracted from the drum by the welding machine which comprises a welding torch to which the wire is fed. Actually, these twists are released when the wire leaves the drum, more specifically, during the unwinding of the wire coils.

However, twists are a serious issue since they are often involved in subsequent welding defects or quality of the welding joints thus obtained.

In addition to the above, another problem exists with welding wire drums that is linked to the stability of the drum. Indeed, some existing drums have an architecture and/or size that render them unstable and lead to the drum possibly falling over during transport, storage or subsequent use.

Furthermore, when using a welding wire drum, the operator should be able to easily detect when the wire is coming to an end so that the operator can intervene as soon as possible to replace an empty drum with a new one. This should be done without the operator having to open the cover of the drum.

Various solutions have already been proposed for trying to solve one or more of these problems. For instance, EP-A-519424 discloses a container with a retainer device placed on the top of the coil and having an outer periphery matching the diameter of the inner wall of the container and an inner bell-mouthed portion defining a wire extraction opening. The retainer can freely descend in the container in contact with the coil as the height of the coil decreases as the wire is being unwound from the coil.

EP-A-636098 teaches to use of a square box with an internal flat cover arranged on the wire coil and matching the internal shape of the box so as to retain the welding wire and avoid or limit the twists.

EP-A-1053189 discloses a polygonal box-like body for accommodating a circular coil of wire during the transportation and the unwinding of the coil and a retainer device arranged inside the body on the coil for preventing accidental entanglement of the wire turn during the unwinding of the wire from an upper end of the coil and a wire conduit device for the guiding the wire out from the body during the unwinding.

EP-A-1693139 discloses a drum for a welding wire coil comprising a wire holding device positioned on the coil for holding the loops in position during an unwinding of the wire. The holding device has a rigid central disc and a flexible cover with a dimension greater than an inner diameter of the drum so that corner portions of the cover slightly rise along an inner wall of the drum.

EP-A-1693140 teaches a drum with a conical, tapered or pyramidal inner wall formed of oblique pieces and comprising a rigid central disc with a central orifice positioned on the coil and across which the wire passes, and further with flexible and deformable peripheral expansions projecting beyond the edge of the disc to maintain the wire loops.

EP-A-1357059 describes a welding wire packaging formed of an internal cylindrical drum and external square box. A container for welding wire in accordance with the preamble of claim 1 is disclosed by WO 2009/027784 A2.

These existing proposals are either not totally satisfying or too complicated. In particular, some of the welding wire containers proposed in the prior art are either not very stable during use, storage or transport, or not easy to handle.

It is therefore a goal of the present invention to provide a new container for welding wire coil that overcomes or at least minimizes the above mentioned problems of twists and non-uniform unwinding of the wire coil, and is furthermore easy to transport and handle, including by means of a crane, and stable during utilization.

The solution according to the present invention is a container for welding wire comprising :
- a body comprising a peripheral wall delimiting an internal volume,
- a bottom structure, and
- a central structure comprising several elongated elements fixed to the bottom structure and extending upwardly in the internal volume of the body, said central structure tapering in the upward direction, whereby the bottom structure comprises a peripheral border, and whereby the elongated elements are connected to the bottom structure by a first end, and whereby the peripheral wall of the body is arranged on the bottom structure in being maintained laterally by the peripheral border, said peripheral border projecting upwardly along a part of the external surface of the peripheral wall of the body.

Depending on the embodiment, the container of the present invention can comprise one or several of the following features:
- the elongated elements are welded to the peripheral border of the bottom structure.
- at least one of the elongated elements comprises, at a second end, a connection element adapted for receiving a hook of a crane.
- the connection element is a loop- or a hook-like structure.
- the elongated elements are connected together by a linking structure arranged at the second end of said elongated elements, preferably said linking structure is a ring and/or the elongated elements are welded to the linking structure.
- the central structure comprises at least 3 elongated elements, preferably at least 5 elongated elements.
- the bottom structure has a circular shape and/or the body has a cylindrical shape.
- the elongated elements are metallic rods or bars, preferably steel or stainless steel, in particular with a surface coating of zinc.
- the bottom structure comprising the peripheral border is made of a metallic material, preferably steel or stainless steel, in particular with a zinc surface coating.
- the peripheral wall of the body is made of cardboard. the lower end of the peripheral wall of the body rests, directly or indirectly, on the first portions of the elongated elements.
- the body further comprises a lid arranged at the top of the body, said lid comprising a central opening through which passes the connection element so as to be positioned outside the body when the lid is positioned on the top of the body.
- each elongated element comprise a fist portion and a second portion separated each other by an elbow, the first portion comprising the first end of each elongated element, and the second portion comprising the second end of each elongated element, preferably the angle α of the elbow is greater than 90° and less than 130°, preferably less than 110°.
- a welding wire coil is positioned on the bottom structure and in the internal volume of the body, the elongated elements of the central structure extending upwardly through the middle of the wire coil, preferably a retainer with a central opening is positioned on the wire coil, the elongated elements extending also upwardly through the central opening of the retainer.

The container according to the invention is suitable for use in a robotic or automatic welding operation, preferably an electric arc welding process, such as a MIG or MAG welding process. During such a welding process, the wire extracted from the container is fed to a welding torch that is either arranged on a welding machine or on a robotic articulated arm.

The present invention will be better understood with regard to the following description of an embodiment of the container of the present invention, made with references to the accompanying figures among which:
- Figure 1 provides a view of the central structure and the body of a container according to the invention,
- Figures 2 and 3 are side views of the central structure of the container of Fig. 1,
- Figure 4 is a view from above of the central structure of the container of Fig. 1,
- Figure 5 is a side view of a container according to the present invention, and
- Figure 6 is an internal view of the container of Fig. 5.

The enclosed Figures show an embodiment of a container for packaging a coil of welding wire, such as a flux cored wire or a metal cored wire, according to the present invention.

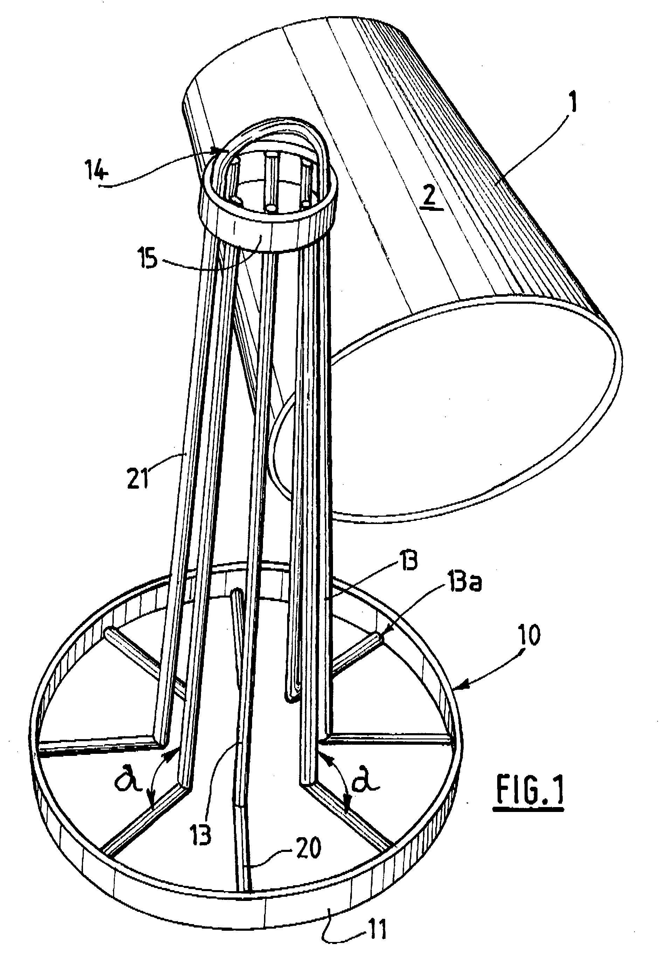

As shown in Figure 1, the container according to the present invention comprises a body 1 having a peripheral wall 2 delimiting an internal volume for receiving the coil of welding wire. The peripheral wall 2 of the body 1 is made of cardboard material and has preferably a cylindrical shape.

The container of the invention further comprises a bottom structure 10 on which rests the wire coil as well as a central structure 12 comprising several elongated elements 13 fixed to the bottom structure 10 and extending upwardly in the internal volume 3 of the body 1. The central structure 12 made of said elongated elements 13 tapers in the upward direction. The elongated elements 13 are metallic rods or bars, preferably they are made of steel or of stainless steel.

The bottom structure 10 has a circular shape or ring-shape and is made of a metallic material, preferably steel or stainless steel. It comprises a peripheral border 11 as shown in Figure 1 on to which are connected the elongated elements 13 by their first end 13a. Preferably, the elongated elements 13 are welded or screwed to the peripheral border 11 of the bottom structure 10.

At least one of the elongated elements 13 comprises, at its second end 13b, a connection element 14 adapted for receiving the hook of a crane. The connection element 14 can be a loop- or a hook-like structure as visible in Figures 1 to 3.

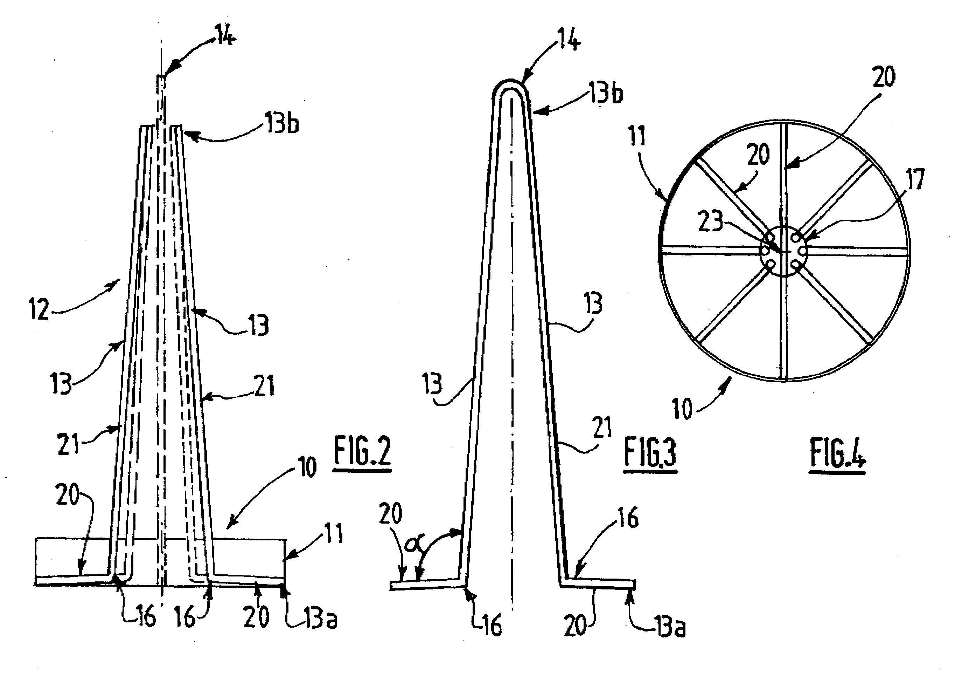

In a preferred embodiment, two elongated elements 13 are made integral so as to be connected by their second ends 13b thereby forming the connection element 14, i.e. a loop-like structure for receiving a hook as shown in Figure 3. Those two elongated elements 13 are diametrally opposed with respect to the center 23 of the structure 12 as shown in Figure 4. The connection element 14 thus obtained exhibits a high resistance to breaking.

In a less preferred embodiment, the connection element 14 can be an additional loop-like structure that is connected, preferably welded, to the second end(s) 13b of one or several elongated elements 13.

Further, the elongated elements 13 are connected together by a linking structure 15 arranged at their second end 13b, preferably said linking structure 15 is a ring to which are welded the elongated elements 13 as shown on Figure 1.

Preferably, the central structure 12 comprises at least 3 elongated elements 13, preferably at least 5 elongated elements. In the embodiment of Figures 1 to 6, 8 elongated elements constitute the central structure 12.

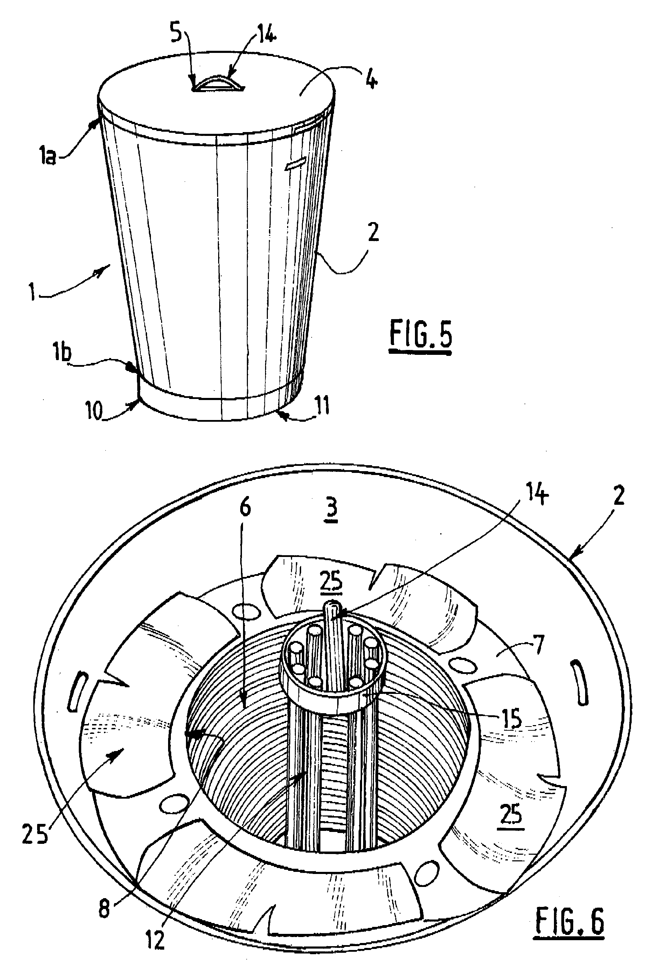

As shown in Figure 5, once the body 1 is arranged on the bottom structure 10, the peripheral wall 2 is maintained laterally by the peripheral border 11 as said peripheral border 11 projects upwardly along a part of the external surface of the peripheral wall 2 of the body 1. Preferably, the lower end 1b of the peripheral wall 2 of the body 1 rests, directly or indirectly, on the first portions 20 of the elongated elements 13 as illustrated in Figures 2 to 4.

More precisely, each elongated element 13 comprises a fist portion 20 and a second portion 21 separated each other by an elbow 16. The first portion 20 comprises the first end 13a of each elongated element 13, whereas the second portion 21 comprises the second end 13b of each elongated element 13. Preferably, the angle α of the elbow is greater than 90° and less than 130°, preferably less than about 110° as shown in Figure 3.

Further, the body 1 further comprises a lid 4 arranged on the top 1a of the body 1, that closes the body 1. The lid 4 comprises a central opening 5 through which passes the connection element 14 so as to be positioned outside the body 1 when the lid 4 is positioned on the top 1a of body 1 as visible in Figure 5.

As illustrated in Figure 6, a welding wire coil 6 is positioned on the bottom structure 10, i.e. in the internal volume 2 of the body 1, with the elongated elements 13 of the central structure 12 extending and tapering upwardly through the middle of the wire coil 6. Preferably, a retainer 7 with a central opening 8 is further positioned on the wire coil 6 and the elongated elements 13 extend upwardly through the central opening 8 of said retainer 7.

The main role of the retainer 7 that is arranged on the top of the welding wire coil 6 is to maintain the wire spirals during transportation and unwinding of the coil during welding, i.e. for preventing accidental entanglement of the wire turn during the unwinding of the wire from an upper end of the coil 6.

The retainer 7 consists of a perforated disc made of either cardboard or polymer (plastic material), steel or a combination of any two or more of these materials. Its shape or contour is preferably adapted to the inner contour of the drum body 1. The retainer 7 provides a constant and continuous feeding of the wire at nearly constant drawing force. The spooled wire is prevented from opening, entangling and forming loops.

The retainer 7 can also comprise flexible or deformable additional elements 25 as represented in Figure 6, that come into contact with the internal surface 3 of the peripheral wall 2 of body 1 thereby better maintaining the spirals of the coil 6. Those flexible or deformable additional elements 25 can be made of polymer material, such as plastic or a solid foam.

More generally speaking, according to the present invention, the hollow body 1 of the container has an internal diameter (D) of at least 40 cm and a height (H) of at least 50 cm. Preferably, the height is less than 200 cm and the diameter is less than 160 cm.

In the embodiment of Figures 1 to 6, the body 1 has a cylindrical shape, but according to other embodiments, it may have a different shape. It may consist in several side panels forming a peripheral wall 2 having a polygonal shape, for example a square, hexagonal or octagonal shape.

The container or drum of the present invention can be used for packaging, storing, transporting and unwinding a coil or spool of welding wire, and said welding wire being useable in a welding operation, preferably an electric arc welding process, such as a MIG or MAG welding process, especially a robotic welding process.

## Claims

1. Container for welding wire comprising:
- a body (1) comprising a peripheral wall (2) delimiting an internal volume (3),
- a bottom structure (10) comprising a peripheral border (11), and
- a central structure (12) being fixed to the bottom structure (10) and extending upwardly in the internal volume (3) of the body (1), said central structure (12) tapering in the upward direction,
**characterized in that**, the central structure (12), comprises several elongated elements (13) being connected to the bottom structure (10) by a first end (13a), and **in that** the peripheral wall (2) of the body (1) is arranged on the bottom structure (10) in being maintained laterally by said peripheral border (11), whereby said peripheral border (11) projects upwardly along a part of the external surface of the peripheral wall (2) of the body (1).

2. Container according to the previous Claim, **characterized in that** the elongated elements (13) are welded to the peripheral border (11) of the bottom structure (10).

3. Container according to any one of the previous Claims, **characterized in that** at least one of the elongated elements (13) comprises, at a second end (13b), a connection element (14) adapted for receiving a hook of a crane.

4. Container according to the previous Claim, **characterized in that** the connection element (14) is a loop- or a hook-like structure.

5. Container according to any one of the previous Claims, **characterized in that** the elongated elements (13) are connected together by a linking structure (15) arranged at the second end (13b) of said elongated elements (13), preferably said linking structure (15) is a ring and/or the elongated elements (13) are welded to the linking structure (15).

6. Container according to any one of the previous Claims, **characterized in that** the central structure comprises at least 3 elongated elements (13), preferably at least 5 elongated elements.

7. Container according to any one of the previous Claims, **characterized in that** the bottom structure (10) has a circular shape and/or the body (1) has a cylindrical shape.

8. Container according to any one of the previous Claims, **characterized in that** the elongated elements (13) are metallic rods or bars, preferably steel or stainless steel.

9. Container according to any one of the previous Claims, **characterized in that** the bottom structure (10) comprising the peripheral border (11) is made of a metallic material, preferably steel or stainless steel.

10. Container according to any one of the previous Claims, **characterized in that** the peripheral wall (2) of the body (1) is made of cardboard, the body (1) having a cylindrical shape.

11. Container according to any one of the previous Claims, **characterized in that** the lower end (1b) of the peripheral wall (2) of the body (1) rests, directly or indirectly, on the first portions (20) of the elongated elements (13).

12. Container according to any one of the previous Claims, **characterized in that** the body further comprises a lid (4) arranged on the top (1a) of the body (1), said lid (4) comprising a central opening (5) through which passes the connection element (14) so as to be positioned outside the body (1) when the lid (4) is positioned on the top (1a) of the body (1).

13. Container according to any one of the previous Claims, **characterized in that** each elongated element (13) comprise a fist portion (20) and a second portion (21) separated each other by an elbow (16), the first portion (20) comprising the first end (13a) of each elongated element (13), and the second portion (21) comprising the second end (13b) of each elongated element (13), preferably the angle (α) of the elbow is greater than 90° and less than 130°, preferably less than 110°.

14. Container according to any one of the previous Claims, **characterized in that** a welding wire coil (6) is positioned on the bottom structure (10) and in the internal volume (2) of the body (1), the elongated elements (13) of the central structure (12) extending upwardly through the middle of the wire coil (6), preferably a retainer (7) with a central opening (8) is positioned on the wire coil (6), the elongated elements (13) extending also upwardly through the central opening (8) of the retainer (7).

## Patentansprüche

1. Behälter für Schweißdraht, umfassend:
- ein Gehäuse (1), das eine Umfangswand (2) umfasst, die ein Innenvolumen (3) begrenzt,
- eine Bodenstruktur (10), und
- eine Mittenstruktur (12), die eine Umfangsbegrenzung (11) umfasst, die an der Bodenstruktur (10) befestigt ist und sich in dem Innenvolumen (3) des Gehäuses (1) aufwärts erstreckt, wobei die Mittenstruktur (12) sich in die Aufwärtsrichtung verjüngt,
**dadurch gekennzeichnet, dass** die Mittenstruktur (12) mehrere längliche Elemente (13) umfasst, die mit der Bodenstruktur (10) durch ein erstes Ende (13a) verbunden sind, und dadurch, dass die Umfangswand (2) des Gehäuses (1) auf der Bodenstruktur (10) angeordnet ist, indem sie seitlich durch die Umfangsbegrenzung (11) gehalten ist, wobei die Umfangsbegrenzung (11) aufwärts entlang eines Teils der Außenoberfläche der Umfangswand (2) des Gehäuses (1) hervorragt.

2. Behälter gemäß dem vorhergehenden Anspruch, **dadurch gekennzeichnet, dass** die länglichen Elemente (13) mit der Umfangsbegrenzung (11) der Bodenstruktur (10) verschweißt sind.

3. Behälter gemäß einem der vorhergehenden Ansprüche, **dadurch gekennzeichnet, dass** mindestens eines der länglichen Elemente (13) an einem zweiten Ende (13b) ein Verbindungselement (14) umfasst, das zum Empfangen eines Hakens eines Krans ausgestaltet ist.

4. Behälter gemäß dem vorhergehenden Anspruch, **dadurch gekennzeichnete, dass** das Verbindungselement (14) eine schlaufen- oder hakenartige Struktur ist.

5. Behälter gemäß einem der vorhergehenden Ansprüche, **dadurch gekennzeichnet, dass** die länglichen Elemente (13) miteinander durch eine Vernetzungsstruktur (15), die an dem zweiten Ende (13b) der länglichen Elemente (13) angeordnet ist, verbunden sind, wobei, vorzugsweise, die Vernetzungsstruktur (15) ein Ring ist und/oder die länglichen Elemente (13) mit der Vernetzungsstruktur (15) verschweißt sind.

6. Behälter gemäß einem der vorhergehenden Ansprüche, **dadurch gekennzeichnet, dass** die Mittenstruktur mindestens 3 längliche Elemente (13) umfasst, vorzugsweise mindestens 5 längliche Elemente.

7. Behälter gemäß einem der vorhergehenden Ansprüche, **dadurch gekennzeichnet, dass** die Bodenstruktur (10) eine kreisförmige Form hat und/oder das Gehäuse (1) eine zylindrische Form hat.

8. Behälter gemäß einem der vorhergehenden Ansprüche, **dadurch gekennzeichnet, dass** die länglichen Elemente (13) metallische Stangen oder Balken sind, vorzugsweise aus Stahl oder Edelstahl.

9. Behälter gemäß einem der vorhergehenden Ansprüche, **dadurch gekennzeichnet, dass** die Bodenstruktur (10), die die Umfangsbegrenzung (11) umfasst, aus einem metallischen Material gefertigt ist, vorzugsweise aus Stahl oder Edelstahl.

10. Behälter gemäß einem der vorhergehenden Ansprüche, **dadurch gekennzeichnet, dass** die Umfangswand (2) des Gehäuses (1) aus Pappe gefertigt ist, wobei das Gehäuse (1) eine zylindrische Form aufweist.

11. Behälter gemäß einem der vorhergehenden Ansprüche, **dadurch gekennzeichnet, dass** das untere Ende (1 b) der Umfangswand (2) des Gehäuses (1) direkt oder indirekt auf den ersten Abschnitten (20) der länglichen Elemente (13) ruht.

12. Behälter gemäß einem der vorhergehenden Ansprüche, **dadurch gekennzeichnet, dass** das Gehäuse außerdem einen Deckel (4) umfasst, der an der Oberseite (1a) des Gehäuses (1) angeordnet ist, wobei der Deckel (4) eine Mittenöffnung (5) umfasst, durch die hindurch das Verbindungselement (14) verläuft, um außerhalb des Gehäuses (1) angeordnet zu sein, wenn der Deckel (4) auf der Oberseite (1a) des Gehäuses (1) positioniert ist.

13. Behälter gemäß einem der vorhergehenden Ansprüche, **dadurch gekennzeichnet, dass** jedes längliche Element (13) einen ersten Abschnitt (20) und einen zweiten Abschnitt (21) umfasst, die voneinander durch ein Knie (16) getrennt sind, wobei der erste Abschnitt (20) das erste Ende (13a) jedes länglichen Elements (13) umfasst und der zweite Abschnitt (21) das zweite Ende (13b) jedes länglichen Elements (13) umfasst, wobei der Winkel (α) des Knies vorzugsweise größer als 90° ist und kleiner als 130° ist, vorzugsweise kleiner als 110°.

14. Behälter gemäß einem der vorhergehenden Ansprüche, **dadurch gekennzeichnet, dass** eine Schweißdrahtspule (6) auf der Bodenstruktur (10) und in dem Innenvolumen (2) des Gehäuses (1) angeordnet ist, wobei sich die länglichen Elemente (13) der Mittenstruktur (12) aufwärts durch die Mitte der Drahtspule (6) erstrecken, wobei vorzugsweise ein Halter (7) mit einer Mittenöffnung (8) auf der Drahtspule (6) positioniert ist und sich die länglichen Elemente (13) ebenfalls aufwärts durch die Mittenöffnung (8) des Halters (7) erstrecken.

## Revendications

1. Récipient pour fil de soudage comprenant .
- un corps (1) comprenant une paroi périphérique (2) délimitant un volume interne (3),
- une structure de fond (10) comprenant une couronne périphérique (11), et
- une structure centrale (12) fixée à la structure de fond (10) et s'étendant vers le haut dans le volume interne (3) du corps (1), ladite structure centrale (12) s'amincissant dans la direction ascendante,
**caractérisé en ce que** la structure centrale (12) comprend plusieurs éléments allongés (13) qui sont raccordés à la structure de fond (10) par une première extrémité (13a) et **en ce que** la paroi périphérique (2) du corps (1) est aménagée sur la structure de fond (10) en étant maintenue latéralement par ladite couronne périphérique (11) de sorte que ladite couronne périphérique (11) fasse saillie vers le haut le long d'une partie de la surface externe de la paroi périphérique (2) du corps (1).

2. Récipient selon la revendication précédente, **caractérisé en ce que** les éléments allongés (13) sont soudés à la couronnes périphérique (11) de la structure de fond (10).

3. Récipient selon l'une quelconque des revendications précédentes, **caractérisé en ce qu'**au moins l'un des éléments allongés (13) comprend, à une seconde extrémité (13b), un élément de raccordement (14) qui est à même de recevoir un crochet d'une grue.

4. Récipient selon la revendication précédente, **caractérisé en ce que** l'élément de raccordement (14) est une structure en forme de boucle ou de crochet.

5. Récipient selon l'une quelconque des revendications précédentes, **caractérisé en ce que** les éléments allongés (13) sont raccordés l'un à l'autre par une structure de liaison (15) aménagée sur la seconde extrémité (13b) desdits éléments allongés (13), de préférence ladite structure de liaison (15) étant un anneau et/ou les éléments allongés (13) étant soudés à la structure de liaison (15).

6. Récipient selon l'une quelconque des revendications précédentes, **caractérisé en ce que** la structure centrale comprend au moins 3 éléments allongés (13), de préférence au moins 5 éléments allongés.

7. Récipient selon l'une quelconque des revendications précédentes, **caractérisé en ce que** la structure de fond (10) a une forme circulaire et/ou le corps (1) a une forme cylindrique.

8. Récipient selon l'une quelconque des revendications précédentes, **caractérisé en ce que** les éléments allongés (13) sont des tiges ou des barres métalliques, de préférence en acier ou en acier inoxydable.

9. Récipient selon l'une quelconque des revendications précédentes, **caractérisé en ce que** la structure de fond (10) comprenant la couronne périphérique (11) est constituée d'un matériau métallique, de préférence de l'acier ou de l'acier inoxydable.

10. Récipient selon l'une quelconque des revendications précédentes, **caractérisé en ce que** la paroi périphérique (2) du corps (1) est constituée de carton, le corps (1) ayant une forme cylindrique.

11. Récipient selon l'une quelconque des revendications précédentes, **caractérisé en ce que** l'extrémité inférieure (1b) de la paroi périphérique (2) du corps (1) repose, directement ou indirectement, sur les premières parties (20) des éléments allongés (13).

12. Récipient selon l'une quelconque des revendications précédentes, **caractérisé en ce que** le corps comprend en outre un couvercle (4) aménagé au sommet (1a) du corps (1), ledit couvercle (4) comprenant une ouverture centrale (5) à travers laquelle passe l'élément de raccordement (14) de manière à être positionné à l'extérieur du corps (1) lorsque le couvercle (4) est positionné au sommet (1a) du corps (1).

13. Récipient selon l'une quelconque des revendications précédentes, **caractérisé en ce que** chaque élément allongé (13) comprend une première partie (20) et une seconde partie (21) séparées l'une de l'autre par un coude (16), la première partie (20) comprenant la première extrémité (13a) de chaque élément allongé (13) et la seconde partie (21) comprenant la seconde extrémité (13b) de chaque élément allongé (13), de préférence l'angle α du coude étant supérieur à 90° et inférieur à 130°, de préférence inférieur à 110°.

14. Récipient selon l'une quelconque des revendications précédentes, **caractérisé en ce qu'**une bobine de fil de soudage (6) est positionnée sur la structure de fond (10) et dans le volume interne (2) du corps (1), les éléments allongés (13) de la structure centrale (12) s'étendant vers le haut à travers le centre de la bobine de fil (6), de préférence un élément de retenue (7) avec une ouverture centrale (8) est positionné sur la bobine de fil (6), les éléments allongés (13) s'étendant également vers le haut à travers l'ouverture centrale (8) de l'élément de retenue (7).
